# EUROPEAN PATENT APPLICATION

(11) **EP 4 628 392 A1**
(43) Date of publication of application: **08.10.2025**
(21) Application number: 24168015.6
(22) Date of filing: 02.04.2024
(51) Int. Cl.: B62D 55/07, B62M 27/02, B62J 1/04

(54) **A FRAME STRUCTURE FOR A MOTORCYCLE**

(71) Applicant: Oruga, Sia, 1039 Riga (LV)
(72) Inventor: Klava, Juris, LV-1039 Riga (LV)
(74) Representative: Kromanis, Artis

(57) **Abstract**

Invention relates to a frame structure for caterpillar motorcycle. The frame comprises an upper frame (1) and a lower frame (10) pivotably coupled to the upper fame (1) through a front bracket (20) and a rear bracket (21). The upper frame (1) comprises a steering pivot pipe (2), a seat support (3) pivotably coupled to the steering pivot pipe (2), a rear lever (4) pivotably interconnecting the seat support (3) to the rear bracket (21), and a front lever (6) pivotably interconnecting the steering pivot pipe (2) to the front bracket (20). The lower frame (10) comprises a lower rear frame (11) pivotably coupled to the rear bracket (21), and a triangle frame (13) pivotally interconnected to the lower rear frame (11) and the front bracket (20). The frame provides independent movement of the lower rear frame (11) and the triangle frame (13) in relation to the upper frame (1).

## Description

### Field of the invention

Invention relates to a frame structure for a motorcycle, especially to a caterpillar motorcycle.

### Background of the invention

Prior art discloses various motorcycles comprising endless tracks or caterpillars. US patent publication No. US11,052,959 discloses an endless track drive motorcycle comprising a front track assembly, a rear track assembly and a frame. The front and rear track assemblies use an endless track circulating around a driven sprocket, bogie sprockets, and idlers to distribute the weight of the vehicle and provide greater traction than a tire would provide. A seat is mounted to the top of the frame. The front track assembly is steerable using handlebars and a suspension system pivotably mounted to the front of the frame.

International application publication No. WO2019/147162 discloses a motorcycle comprising an endless track, guide runners with wear strips, lateral panels, a front lever, a rear lever, shock absorbers, a drive system, a braking system, and also a ski. Disposed between the lateral panels of the track unit is a frame provided with a track unit fastening assembly. The track unit fastening assembly is configured in the form of a trapezoidal subframe. Another design of a caterpillar motorcycle is disclosed in Chinese utility model registration No. CN204355246. Similar design is also disclosed in Czech Republic utility model registration No. CZ7039U1. Russian utility model registrations Nos. RU14563U1, RU183927U1 and RU183959U1 also disclose similar caterpillar motorcycles.

### Summary of the invention

The present invention is a frame structure for a motorcycle, comprising an upper frame and a lower frame. The upper fame is pivotably coupled to the lower frame through a front bracket and a rear bracket so that the upper frame can move relative to the lower frame or vice versa. This relative movement between the upper frame and the lower frame provide independent suspension and increases off-road capabilities of the motorcycle.

The upper frame comprises a steering pivot pipe, a seat support pivotably coupled to the steering pivot pipe, a rear lever pivotably interconnecting the seat support to the rear bracket. The upper frame also comprises a rear shock absorber pivotably interconnecting the seat support to the rear bracket. In a front part of the upper frame, it comprises a front lever pivotably interconnecting the steering pivot pipe to the front bracket, and a front shock absorber pivotably interconnecting the steering pivot pipe to the front lever.

The result is an increase in the cross-country capability and stability of the one endless track vehicle.

The lower frame comprises a lower rear frame pivotably coupled to the rear bracket. The lower rear frame comprises a rear wheel connection point for attachment of a rear wheel. The lower frame also comprises a triangle frame having a front corner, a rear corner, and a lower corner. The triangle frame at its rear corner is pivotably coupled to the lower rear frame forming a lower steering joint. The triangle frame at its front corner is pivotably coupled to the front bracket. The front corner of the triangle frame comprises a front wheel connection point for attachment of a front wheel and the lower corner of the triangle frame comprises a middle wheel connection point for attachment of a middle wheel.

The steering pivot tube of the upper frame in relation to the lower steering joint of the lower frame is arranged so that a hinge axis of the steering pivot tube coincides with a hinge axis of the lower steering joint that pivotally couples the triangle frame to the lower rear frame. This arrangement provides increased steering capabilities for the motorcycle.

The frame structure further comprises a front wheel rotatably attached to the front wheel connection point of the triangle frame, a middle wheel rotatably attached to the middle wheel connection point of the triangle frame, and a rear wheel rotatably attached to the rear wheel connection point of the lower rear frame. The frame structure further comprises an endless track extending around the front wheel, the middle wheel, and the rear wheel.

In one embodiment of the frame structure, the upper frame may comprise an auxiliary front bracket pivotably coupled to the triangle frame, and an auxiliary steering pivot pipe lever pivotably coupled to the steering pivot pipe. The auxiliary front bracket is pivotably coupled to the auxiliary steering pivot pipe lever providing additional link between the triangle frame and the steering pivot pipe.

In context of this patent application the steering pivot tube should be considered as complex steering unit comprising additional elements for providing necessary connections with other parts of the frame structure. The steering pivot tube comprises a pivot tube bracket having a joint that pivotally couples the steering pivot tube to the seat support and a rotatable steering unit mounted on said steering pivot tube so that it rotates around the hinge axis of the steering pivot tube. A handle bar is located on the rotatable steering unit. The rotatable steering unit comprises a lower joint pivotally connecting the rotatable steering unit to the front lever, and an upper joint pivotally connecting the rotatable steering unit to the auxiliary steering pivot pipe lever, and a shock absorber joint pivotally connecting the rotatable steering unit to the front shock absorber. The pivot tube bracket comprises a stop configured to restrict a pivot of the seat support in relation to the steering pivot tube. Hence restricting the up and down movement of the upper frame in relation to the lower frame.

### Brief description of the drawings

Fig. 1 is a side view of a frame structure for a motorcycle, wherein an upper frame (1) is in its highest or furthers position in relation to a lower frame (10).
Fig. 2 is a side view of the frame structure as seen in Fig. 1, wherein the upper frame (1) is in its lowest or closest position in relation to the lower frame (10).
Fig. 3 is back perspective of the frame structure with a slightly turned middle wheel (41).
Fig. 4 is another back perspective view of the frame structure as seen in Fig. 3.
Fig. 5 is a top view of the frame structure as seen in Figs. 3 and 4.
Fig. 6 is the frame structure as seen in Fig. 4, but with partly removed endless track (50) and a seat (60) to show more clearly the members of the frame structure.
Fig. 7 is side view of the frame structure, when an upper frame (1) is in its highest or furthers position in relation to a lower frame (10), illustrating linear and pivot movements of the members of the frame structure.
Fig. 8 is side view of the frame structure, when the upper frame (1) is in its lowest or closest position in relation to the lower frame (10), illustrating linear and pivot movements of the members of the frame structure.
Fig. 9 is a side view of the frame structure, wherein only the rear side of the upper frame (1) is in its lowest or closest position in relation to the lower frame (10).
Fig. 10 is a zoom-in view of a steering pivot pipe (2) as seen in Fig. 4.

### Detailed description of the embodiments

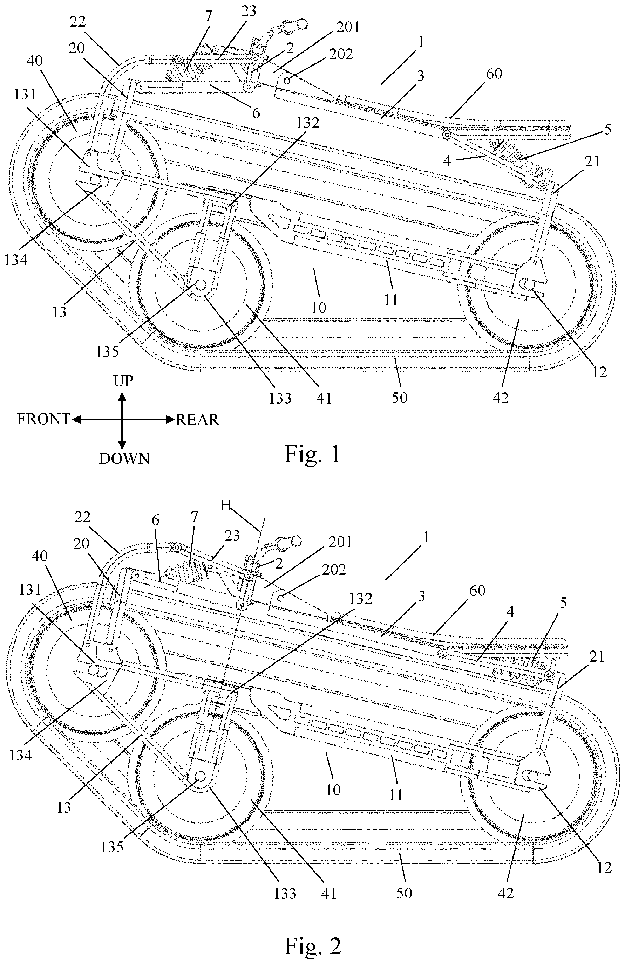

Figs. 1 and 2 are side views of a frame structure for a motorcycle. The frame structure comprises an upper frame (1) and a lower frame (10) pivotally coupled to the upper frame (1) through a front bracket (20) and a rear bracket (21) allowing the upper frame (1) to move up and down in relation to the lower frame (10). Fig. 1 shows the upper frame (1) in its highest or furthers position in relation to the lower frame (10). Fig. 2 shows the upper frame (1) is in its lowest or closest position in relation to the lower frame (10).

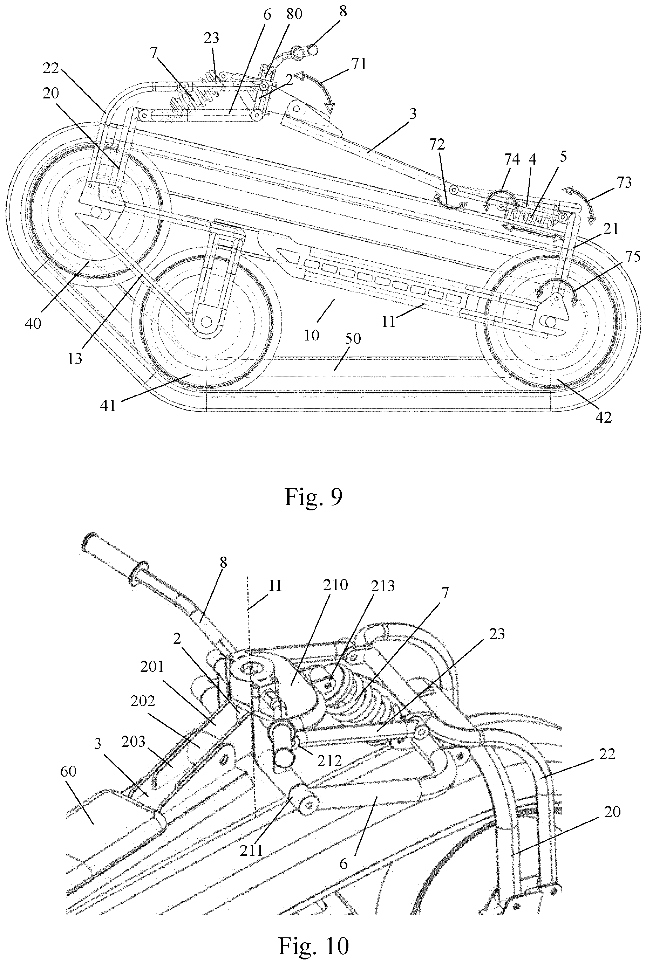

As seen in Figs. 1 and 2, the upper frame (1) comprises a steering pivot pipe (2) comprising additional brackets and joints (as seen in more detail in Fig. 10) for coupling the steering pivot pipe (2) to other members of the frame structure. The upper frame (1) comprises a seat support (3) pivotably coupled to the steering pivot pipe (2) through a joint (202) of a pivot tube bracket (201). The seat support (3) itself comprises a seat (60). The upper frame (1) comprises a rear lever (4) pivotably interconnecting the seat support (3) to the rear bracket (21), and a rear shock absorber (5) pivotably interconnecting the seat support (3) to the rear bracket (21). The rear lever (4) and the rear shock absorber (5) provide up and down movement of a rear part of the upper frame (1) in relation to the lower frame (10). Hence, a rear suspension system is provided. The upper frame (1) comprises a front lever (6) pivotably interconnecting the steering pivot pipe (2) to the front bracket (20), and a front shock absorber (7) pivotably interconnecting the steering pivot pipe (2) to the front lever (6). The front lever (6) and the front shock absorber (7) provide up and down movement of a front part of the upper frame (1) in relation to the lower frame (10). Hence, a front suspension system is provided.

As also seen in Figs. 1 and 2, the lower frame (10) comprises a lower rear frame (11) pivotably coupled to the rear bracket (21). The lower rear frame (11) comprises a rear wheel connection point (12), at which a rear wheel (42) is attached. The lower frame (10) comprises a triangle frame (13) having a front corner (131), a rear corner (132), and a lower corner (133). The triangle frame (13) at its rear corner (132) is pivotably coupled to the lower rear frame (11). The pivot or turn of the triangle frame (13) in relation to the lower rear frame (11) is provided around a hinge axis (H). The front corner (131) of the triangle frame (13) is pivotably coupled to the front bracket (20). The front corner (131) of the triangle frame (13) comprises a front wheel connection point (134), at which a front wheel (40) is rotatably attached, and the lower corner (133) of the triangle frame (13) comprises a middle wheel connection point (135), at which a middle wheel is rotatably attached. The frame structure comprises an endless track (50) extending around the front wheel (40), the middle wheel (41) and the rear wheel (42).

As seen in Figs. 1 and 2 the upper frame (1) comprises an auxiliary front bracket (22) pivotably coupled to the triangle frame (13), and an auxiliary steering pivot pipe lever (23) pivotably coupled to the steering pivot pipe (2). The auxiliary front bracket (22) is pivotably coupled to the auxiliary steering pivot pipe lever (23) providing additional link between the triangle frame (13) and the steering pivot pipe (2).

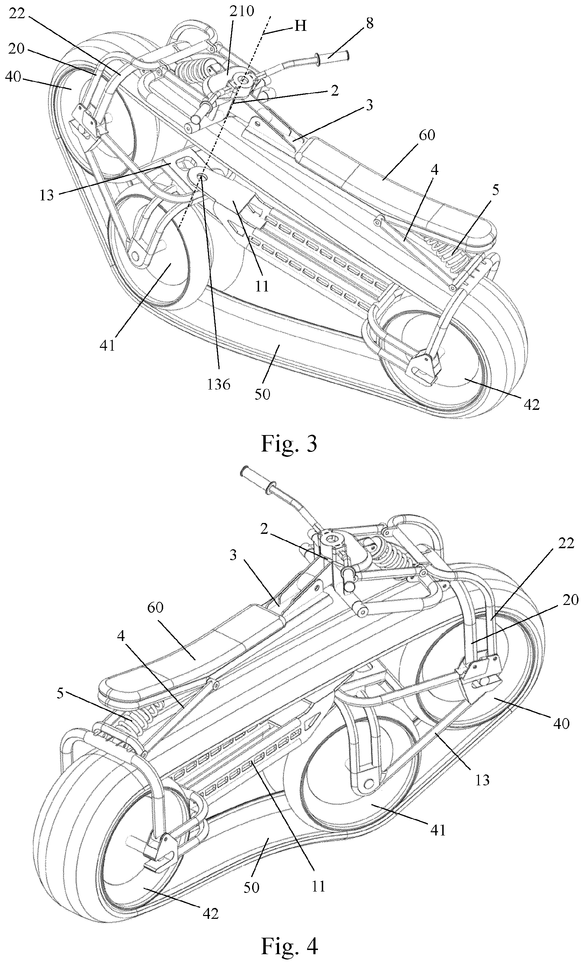

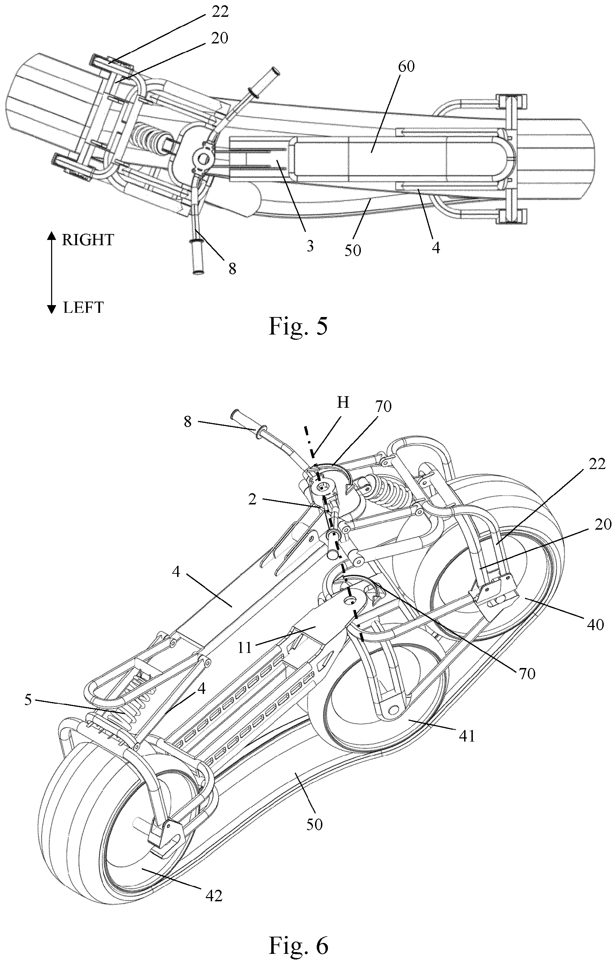

Figs. 3 to 6 illustrate a frame structure with a slightly turned front wheel (40) and middle wheel (41) to a right. Figs. 3 and 4 are back perspective views and Fig. 5 is a top view. Fig. 6 illustrates the motorcycle with partly removed endless track (50) and the seat (60) to show more clearly the members of the frame structure and their position during the turn. The lower frame (10) comprises a lower steering joint (136) configured to provide a pivot coupling between the lower rear frame (11) and the triangle frame (13). The upper frame comprises the steering pivot pipe (2) configured to provide a pivot coupling between the seat support (3) and the front lever (6) that in turn is pivotably coupled to the front bracket (20), that in turn is pivotably coupled to the triangle frame (13). The steering pivot pipe (2) and the lower steering joint (136) have common hinge axis (H) so that when the steering handle bar (8) is turned to the right (as seen in this embodiment) then all the front part of the frame structure is turned (70) in relation to the rear part of the frame structure. The front part of the frame structure includes the triangle frame (13), the front bracket (20), the front lever (6). The rear part of the frame structure includes the lower rear frame (11), the rear bracket (21), the rear lever (4) and the seat support (3). In result of this arrangement, effective steering of endless track motorcycle can be achieved.

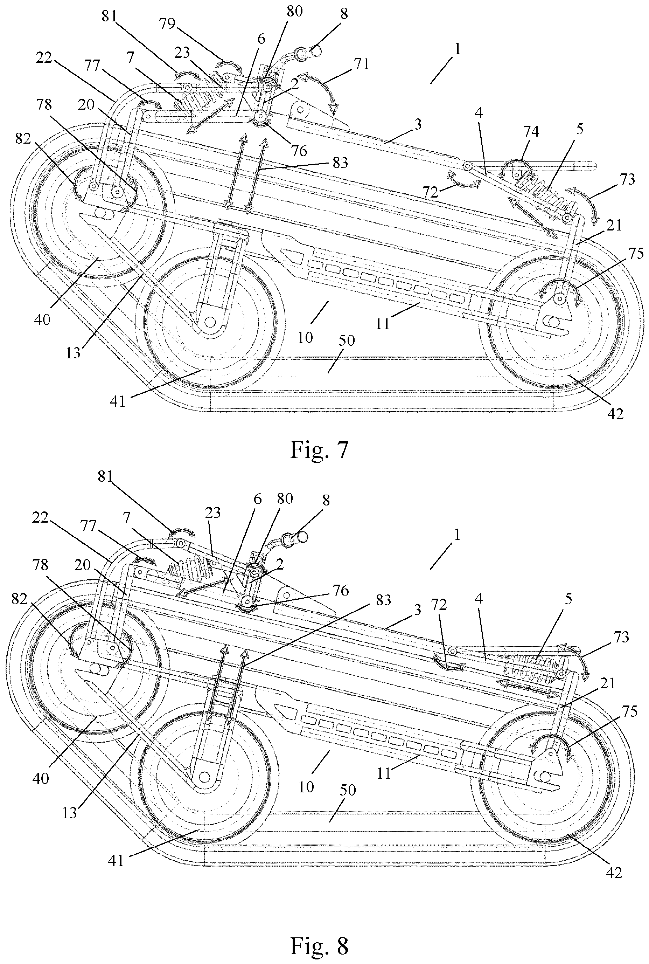

Fig. 7 is side view of the frame structure, when the upper frame (1) is in its highest or furthers position in relation to the lower frame (10), illustrating linear up and down movements (82) and pivot movements (71 to 81) of the members of the frame structure. The rear suspension of the frame structure is provided by a pivot (71) of the seat support (3) in relation to the steering pivot pipe (2); a pivot (72) of the rear lever (4) in relation to the seat support (3); a pivot (73) of the rear lever (4) and the rear shock absorber (5) in relation to the rear bracket (21); a pivot (74) of the rear shock absorber (5) in relation to the seat support (3); and a pivot (75) of the rear bracket (21) in relation to the lower rear frame (11). The front suspension of the frame structure is provided by a pivot (76) of the front lever (6) in relation to the steering pivot pipe (2); a pivot (77) of the front lever (6) in relation to a front bracket (20); a pivot (78) of the front bracket (20) in relation to the triangle frame (13); and pivot (79) of the front shock absorber (7) in relation to the steering pivot pipe (2). In embodiment of the auxiliary steering pivot pipe lever (23) and the auxiliary front bracket (22) the front suspension of the frame structure is provided by a pivot (8) of the auxiliary steering pivot pipe lever (23) in relation to the steering pivot pipe (2); a pivot (81) of the auxiliary front bracket (22) in relation to the auxiliary steering pivot pipe lever (23); and a pivot (82) of the auxiliary front bracket (22) in relation to the triangle frame (13). In result of aforementioned pivot movements, a linear movement (83) of the upper frame (1) in relation to the lower frame (10) is provided.

Fig. 8 is side view of the frame structure, when the upper frame (1) is in its lowest or closest position in relation to the lower frame (10), illustrating linear up and down movements (82) and pivot movements (71 to 81) of the members of the frame structure as seen in Fig. 7.

Fig. 9 is a side view of the frame structure illustrating a function of the rear suspension, wherein only the rear side of the upper frame (1) is in its lowest or closest position in relation to the lower frame (10). This movement of the rear suspension is provided by pivot movements (71 to 75) as illustrated and described in Figs. 7 and 8.

Fig. 10 is a zoom-in view of a steering pivot pipe (2) as seen in Fig. 4. Multiple members of the frame structure are pivotally coupled to the steering pivot pipe (2), which should be considered as a unit that comprises additional members that provide all aforementioned connections. Fig. 10 illustrates one embodiment of the steering pivot tube (2) comprising a pivot tube bracket (201) having a joint (202) that pivotally couples the steering pivot tube (2) to the seat support (3). The pivot tube bracket (201) comprises a stop (203) configured to restrict pivoting of the seat support (3) in relation to the steering pivot tube (2). Hence, restricting the up and down movement of the upper frame (1) in relation to the lower frame (10). In Figs. 7 and 8 it can be seen that the stop (203) of the pivot tube bracket (201) is against the seat support (3) restricting further pivoting of the seat support (3) in relation to the steering pivot tube (2). In Fig. 9 it can be seen that the stop (203) of the pivot tube bracket (201) is above the seat support (3) allowing the pivoting (71) of the seat support (3) in relation to the steering pivot tube (2). The steering pivot tube (2) comprises a rotatable steering unit (210) mounted on said steering pivot tube (2) so that it rotates around the hinge axis (H) of the steering pivot tube (2). The rotatable steering unit (210) comprises a lower joint (211) pivotally connecting the rotatable steering unit (210) to the front lever (6), and an upper joint (212) pivotally connecting the rotatable steering unit (210) to the auxiliary steering pivot pipe lever (23), and a shock absorber joint (213) pivotally connecting the rotatable steering unit (210) to the front shock absorber (7).

Unless otherwise stated, the words "up", "down", "top", "bottom", "upper", and "lower" should be interpreted within a gravitational framework. "Down" is the direction that gravity would pull an object. "Up" is the opposite of "down". "Bottom" is the part of an object that is down farther than any other part of the object. "Top" is the part of an object that is up farther than any other part of the object. "Upper" refers to top and "lower" refers to the bottom.

As used herein, "front" indicates the side of an object that is closest to a forward direction of travel under normal use of the object or the side or part of an object that normally presents itself to view or that is normally used first. "Rear" or "back' refers to the side that is opposite the front.

As used herein, the word "pivot" is intended to include any mechanical arrangement that allows for rotational motion. Non-limiting examples of pivots may include hinges, holes, posts, dowels, pins, points, rods, shafts, balls, and sockets, either individually or in combination.

While the invention may be susceptible to various modifications and alternative forms, specific embodiments of which have been shown by way of example in the figures and have been described in detail herein, it should be understood that the invention is not intended to be limited to the particular forms disclosed. Rather, the invention includes all modifications, equivalents, and alternatives falling within the scope of the invention as defined by the following claims.

### List of references:

1 - an upper frame
2 - a steering pivot pipe;
201 - a pivot tube bracket;
202 - a joint of the pivot tube bracket;
203 - a stop of the pivot tube bracket;
210 - a rotatable steering unit;
211 - a lower joint of the rotatable steering unit;
212 - an upper joint of the rotatable steering unit;
213 - a shock absorber joint of the rotatable steering unit;
3 - a seat support;
4 - a rear lever;
5 - a rear shock absorber;
6 - a front lever;
7 - a front shock absorber;
8 - a handle bar;
10 - a lower frame;
11 - a lower rear frame;
12 - a rear wheel connection point;
13 - a triangle frame;
131 - a front corner of the triangle frame;
132 - a rear corner of the triangle frame;
133 - a lower corner of the triangle frame;
134 - a front wheel connection point;
135 - a middle wheel connection point;
136 - a lower steering joint;
20 - a front bracket;
21 - a rear bracket;
22 - an auxiliary front bracket;
23 - an auxiliary steering pivot pipe lever;
40 - a front wheel;
41 - a middle wheel;
42 - a rear wheel;
50 - an endless track;
60 - a seat;
70 - a rotation of a front part in relation to a rear part of a frame structure;
71 - a pivot of a seat support in relation to a steering pivot pipe;
72 - a pivot of a rear lever in relation to a seat support;
73 - a pivot of a rear lever and a rear shock absorber in relation to a rear bracket;
74 - a pivot a rear shock absorber in relation to a seat support;
75 - a pivot of a rear bracket in relation to the lower rear frame;
76 - a pivot of a front lever in relation to a steering pivot pipe;
77 - a pivot of a front lever in relation to a front bracket;
78 - a pivot of a front bracket in relation to a triangle frame;
79 - a pivot of a front shock absorber in relation to a steering pivot pipe;
80 - a pivot of an auxiliary steering pivot pipe lever in relation to a steering pivot pipe;
81 - a pivot of an auxiliary front bracket in relation to an auxiliary steering pivot pipe lever;
82 - a pivot of an auxiliary front bracket in relation to a triangle frame;
83 - a linear movement of an upper frame in relation to a lower frame; and
H - a hinge axis of the steering pivot pipe and the lower steering joint.

## Claims

1. A frame structure for a motorcycle, comprising:
an upper frame (1) and a lower frame (10), wherein the upper fame (1) is pivotably coupled to the lower frame (10) through a front bracket (20) and a rear bracket (21),
wherein the upper frame (1) comprises:
a steering pivot pipe (2),
a seat support (3) pivotably coupled to the steering pivot pipe (2),
a rear lever (4) pivotably interconnecting the seat support (3) to the rear bracket (21),
a rear shock absorber (5) pivotably interconnecting the seat support (3) to the rear bracket (21),
a front lever (6) pivotably interconnecting the steering pivot pipe (2) to the front bracket (20),
a front shock absorber (7) pivotably interconnecting the steering pivot pipe (2) to the front lever (6),
wherein the lower frame (10) comprises:
a lower rear frame (11) pivotably coupled to the rear bracket (21), wherein the lower rear frame (11) comprises a rear wheel connection point (12);
a triangle frame (13) having a front corner (131), a rear corner (132), and a lower corner (133), wherein the triangle frame (13) at its rear corner (132) is pivotably coupled to the lower rear frame (11) and at its front corner (131) is pivotably coupled to the front bracket (20), wherein the front corner (131) of the triangle frame (13) comprises a front wheel connection point (134) and the lower corner (133) of the triangle frame (13) comprises a middle wheel connection point (135).

2. The frame structure according to claim 1, wherein the upper frame (1) comprises an auxiliary front bracket (22) pivotably coupled to the triangle frame (13), and an auxiliary steering pivot pipe lever (23) pivotably coupled to the steering pivot pipe (2), wherein the auxiliary front bracket (22) is pivotably coupled to the auxiliary steering pivot pipe lever (23) providing additional link between the triangle frame (13) and the steering pivot pipe (2).

3. The frame structure according to claim 1 or 2, wherein a hinge axis (H) of the steering pivot pipe (2) coincides with a hinge axis (H) of the lower steering joint (136) that pivotally couples the triangle frame (13) to the lower rear frame (11).

4. The frame structure according to any claim of 1 to 3, wherein comprises a front wheel (40) rotatably attached to the front wheel connection point (134) of the triangle frame (13), a middle wheel (41) rotatably attached to the middle wheel connection point (135) of the triangle frame (13), and a rear wheel (42) rotatably attached to the rear wheel connection point (12) of the lower rear frame (11).

5. The frame structure according to any claim of 1 to 4, wherein comprises an endless track (50) extending around the front wheel (40), the middle wheel (41) and the rear wheel (42).

6. The frame structure according to any claim of 1 to 5, wherein the steering pivot tube (2) comprises:
a pivot tube bracket (201) having a joint (202) that pivotally couples the steering pivot tube (2) to the seat support (3); and
a rotatable steering unit (210) mounted on said steering pivot tube (2) so that it rotates around the hinge axis (H) of the steering pivot tube (2),
wherein the rotatable steering unit (210) comprises a lower joint (211) pivotally connecting the rotatable steering unit (210) to the front lever (6), and an upper joint (212) pivotally connecting the rotatable steering unit (210) to the auxiliary steering pivot pipe lever (23), and a shock absorber joint (213) pivotally connecting the rotatable steering unit (210) to the front shock absorber (7).

7. The frame structure according to claim 6, wherein the pivot tube bracket (201) comprises a stop (203) configured to restrict a pivot of the seat support (3) in relation to the steering pivot tube (2).
